(19) **Europäisches Patentamt / European Patent Office / Office européen des brevets**

(11) **EP 2 904 057 B1**

(12) **EUROPEAN PATENT SPECIFICATION**

(45) Date of publication and mention
of the grant of the patent:
**07.12.2016 Bulletin 2016/49**

(51) Int Cl.:
***C09D 5/00*** *(2006.01)*

(21) Application number: **13771480.4**

(86) International application number:
**PCT/EP2013/070497**

(22) Date of filing: **02.10.2013**

(87) International publication number:
**WO 2014/053522 (10.04.2014 Gazette 2014/15)**

(54) **LOW VOC COLORANT COMPOSITIONS**

FARBSTOFFZUSAMMENSETZUNGEN MIT GERINGEM VOC-GEHALT

COMPOSITIONS DE COLORANT À FAIBLE TENEUR EN VOC

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **05.10.2012 EP 12187521**

(43) Date of publication of application:
**12.08.2015 Bulletin 2015/33**

(73) Proprietor: **Akzo Nobel Coatings International B.V.**
**6824 BM Arnhem (NL)**

(72) Inventors:
• **ELLIOTT, David**
  **Marlow**
  **Buckinghamshire SL7 3EJ (GB)**

• **JHEETA, Ravinder**
  **Slough**
  **Berkshire SL1 5DJ (GB)**

(74) Representative: **Akzo Nobel IP Department**
  **Velperweg 76**
  **6824 BM Arnhem (NL)**

(56) References cited:
**EP-A1- 0 108 536      WO-A1-2006/102341**
**WO-A1-2011/063124      KR-B1- 100 989 411**
**US-A1- 2003 203 991**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

Printed by Jouve, 75001 PARIS (FR)

**Description**

This invention relates to liquid colorant compositions which are useful in colouring both solventborne and waterborne base paints and which contain low amounts of or are substantially free of volatile organic compounds. In particular, compositions are provided which do not block open nozzles in in-store tinting machines and which provide good paint properties, in particular in architectural paints. It also provides in-store tinting machines fitted with the colorants.

Colorants are essentially concentrated pigment compositions containing stably dispersed pigments. The characteristics of such compositions are such that they can be added, alone or in combination with other colorants containing different pigments, to a base paint and mixed in to achieve a desired colour of a ready for use paint. A base paint differs from a ready for use (RFU) paint in that the colour has not been finally adjusted.

By having a number of the colorants each formulated using pigments of different hues, a large number of coloured paints can be provided by simply mixing at least one of the colorant(s) with the appropriate base paint in accordance with a predetermined recipe. Even more colours can be produced by providing a plurality of base paints, themselves varying in hue, including clear base paint.

The utility of known systems comprising colorants and base paints is that paints of many colours may be produced very quickly by simply mixing the required colorant composition(s) with the selected base paint. This is especially important for small stores where a very large range of coloured paints may be supplied on demand without the need for keeping a stock of paint covering the complete colour range.

Such in-store tinting systems usually comprise up to twenty colorants (also known as tinters) and, say, three base paints in each category. In this way light, medium and deep colours can be made.

The colorants are usually housed in a tinting machine from which the individual colorants are dispensed according to the manufacturer's recipe from containers connected to or fitted with exit nozzles. Dosage may be manual or controlled by a computer. The problem with this type of system is that after dispensing is completed there is inevitably a residue of the colorant left in or on the nozzle that dries over time and partially or completely blocks the nozzle making subsequent accurate dispensing impossible. This is an even more severe problem for open nozzle tinting machines which have nozzles without a tap or valve system to isolate the colorant from the atmosphere once an addition has been made. In such machines colorants remain exposed to the atmosphere and, unless properly formulated, will eventually dry and block the nozzle.

Tinting machine manufacturers have attempted to overcome the problem by providing a degree of humidification in the vicinity of the nozzles. Whilst this approach reduces the problem it nevertheless adds complexity and cost to the manufacture and maintenance of the machines.

Known colorants use humectants to reduce the problem of nozzle blockage. Unfortunately, the humectants themselves tend to be volatile, contributing to the total volatile organic content (VOC) as they evaporate. Of course, as they evaporate they leave behind the dry residue referred to above which eventually blocks the dispensing nozzles.

Other known colorants use humectants which, because of their low volatility, do not contribute to VOC. However, these tend to plasticise the binder polymer resulting in soft final coatings which are easily damaged in normal use.

Known colorants may also contain stabilising agents to help disperse and stabilise the pigments in the colorant. However, dried coatings derived from colorants containing large amounts of stabilising agents also tend to be soft.

International application WO2011/151277 discloses compositions which are intended to overcome the problem described above. Such colorant compositions do indeed show a much reduced tendency to block the nozzles with dried colorant. However, we have now discovered that when using the compositions of WO2011/151277, tinting machines fitted with open nozzles are prone to forming a build-up of colorant at or near the nozzle. This is especially so in busy stores, where the volume of each colorant dispensed per month can exceed 50 litres and may even reach many hundreds of litres.

The build-up is thought to be partly dried colorant and can be gelatinous rather than dry in nature. Whilst the build-up does not block the nozzle, it can nevertheless cause inaccurate dispensing of colorant to the base paint. This is because the build-up can take the form of a small stalactite which can partly obscure the nozzle. When the required amount of colorant is dispensed from the nozzle some will impinge on the stalactite causing it to further increase in size. Of course, since an unknown amount of the colorant remains on the stalactite, the colour of that paint will not be accurate.

International application WO2006/102341 discloses colorants for refinish basecoats. However, the problem of nozzle blocking, especially in low VOC colorants, is not recognised nor considered here.

Thus there is a need for colorant compositions which do not block nozzles, are essentially VOC free and do not produce soft dried coatings.

According to a first aspect of the present invention, there is provided an aqueous liquid colorant composition having a volatile organic content up to 50g/l and suitable for colouring aqueous or solventborne architectural coatings and base paints comprising, based on the total weight of the composition,

   i) from 1 to 26% of non-volatile organic liquid having a vapour pressure up to 1.3 N/m$^2$ at 25°C and comprising a mixture of polyethylene glycol (PEG) and polypropylene glycol (PPG)

ii) from 2 to 13% of stabilising agent

iii) from 4 to 77% of colour pigment

iv) from 0 to 8% of rheology modifying clay

v) from 0 to 20% of extender

wherein the ratio of the combined weight of iii)+iv)+v) : the combined weight of i)+ii) is from 0.8 to 2.75:1 and the combined weight of the non-volatile organic liquid i) and the stabilising agent ii) is no greater than 28% and the combined weight of the rheology modifying clay iv) and the extender v) is at least 2% when the amount of colour pigment is less than 51%.

It has been shown that when the compositions according to the first aspect of the present invention are used, the build up of the colorant at or near the nozzle is greatly reduced.

According to a second aspect of the invention there is provided an architectural coating composition comprising or consisting of at least one colorant according to the first aspect and a base paint.

According to a third aspect of the invention there is provided a tinting scheme comprising or consisting of at least one base paint and at least one colorant of the present invention.

According to a fourth aspect of the invention there is provided a tinting machine for in-store tinting of base paint comprising or consisting of at least one colorant of the present invention in a container, the container fitted or connected to an exit nozzle, preferably an open nozzle. In some embodiments, the colorant is packaged in a container having a volume of from 0.5 to 5 litres, preferably, the base paint is packaged in a container having a volume of from 0.5 to 25 litres.

According to a fifth aspect of the present invention, there is also provided a method for in-store production of architectural coating including the steps of dispensing at least one colorant selected from a tinting machine of the invention into a base paint.

In some embodiments, the colorant contains less than 5wt% of polymeric binder, based on the non-volatile content of the paint,.as any more tends to make nozzle blockage worse. More preferably, the colorant is free of polymeric binder.

In some embodiments, the colour pigment comprises from 4 to 70wt%, prefereably from 4 to 66wt%, more preferably from 4 to 55 wt% , still more preferably from 4 to 40wt%, even more preferably from 5 to 30wt% and most preferably from 5 to 20wt%.

**Non- volatile organic liquid**

The non-volatile organic liquid is a liquid that is not volatile at 25°C. For the purposes of this invention, an organic liquid having a vapour pressure up to $1.3N/m^2$ is non-volatile. The lack of volatility means that it does not evaporate and thus does not contribute to VOC. It is non-micellising. Any mixture comprising PEG and PPG will do so long as it is a flowable liquid when tested in accordance with the syringe test described hereinbelow, and that it satisfies the vapour pressure limitation.

Polyethylene glycol is also known as polyethylene oxide (PEO) and polyoxyethylene (POE). Polylpropylene glycol is also known as polypropylene oxide

In some embodiments, PEG according to the present invention has a number average molecular weight of at least 200 Daltons. Preferably, the molecular weight is from 200 to 800, more preferably from 200 to 600 Daltons, yet more preferably from 300 to 500 Daltons and most preferably PEG of molecular weight 400 Daltons is used.

In some embodiments, PPG according to the present invention has a number average molecular weight of between 300 to 1200 Daltons. Preferably the molecular weight is from 400 to 1000, more preferably PPG is selected from PPG400, PPG725 and PPG1000 (the number designating the molecular weight). The use of PPG725 is particularly useful in reducing the build-up formed by colorants, and is most preferred.

In some embodiments, the amount of non-volatile organic liquid comprises or consists from 4 to 25, more preferably from 4 to 22, even more preferably from 4 to 20, yet more preferably from 4 to 19.5 wt%, still more preferably from 6 to 17wt% and most preferably from 4 to 17wt%.

Preferably, the ratio of PEG:PPG is from 8:2 to 2:8, more preferably from 7:3 to 3:7.

**Stabilising Agents**

Stabilising agents are amphipathic organic materials containing both hydrophilic and hydrophobic groups. They may be anionic, cationic or non-ionic. Coating compositions, in particular architectural coatings, usually consist of anionic and/or non-ionic ingredients and thus cationic stabilising agents are preferably avoided. Above a minimum concentration in a liquid, stabilising agents form micelles. Suitable stabilising agents include surfactants and dispersants. There is no accepted distinction between the two but generally the higher molecular weight stabilising agents of number average molecular weight more than 2000 Daltons are usually referred to as dispersants whilst stabilsizing agents of lower molecular weight are referred to as surfactants.

Surfactants are preferred as they tend to be more compatible with both solventborne and waterborne base paints. More preferably, colorants comprising surfactants as the stabilising agents contain no more than5wt% of dispersant, even more preferably no more than 3wt% and most preferably are free of dispersants. Anionic and/or non-ionic stabilising agents are preferred. Most preferred are stabilising agents comprising mixtures of both anionic and non-ionic surfactants. Whilst not wishing to be bound by this, it is thought that this is partly because the non-ionics provide long term dispersion stability whilst the anionics are important for wetting the pigments during the dispersion stage of colorant production. We have also found that such a combination is able to produce stable dispersions of many different pigments. A still further advantage is that when more than one colorant is added to a base paint to make the required colour, the different pigments from each colorant remain stable in the final paint.

The primary role of the stabilising agent in the colorant composition is to disperse and prevent agglomeration of the pigment particles and thereby produce a stable dispersion. Generally, pigments which are ground to fine particle size to develop the colour also have the greater surface area. Consequently more stabilising agent is required to stabilise colorants containing such high surface area pigments than those based on coarser pigments. However, no more than 13wt% of the stabilising agent should be used in the colorant as this causes inadequate water resistance in the derived dried paint films.

As the colorants are for use in both solventborne and waterborne basepaints an important feature of the stabilising agent is that it may be added to both types of base paint without flocculation or other detrimental effect.

Examples of suitable stabilising agents for use in this invention include fatty acid amide ethoxylates such as the Bermodol SPS types including 2525, 2528, 2532, 2541 and 2543 and alkyl glucosides such as the Glucopon, Triton and Dymsol types and sorbitol fatty esters such as the Tween and Span types and alkyl ethoxylates such as the Emulsogen LCN types and alkyl phenol ethoxylates such as the Berol types and anionic surfactants based on ethoxylated phosphated alcohols such as Dispersogen LFH, Dispersogen LFS, Nuosperse FA 196and Disperbyk 102 and salts of polyelectrolytes such as Orotan 731 and phospholipid type surfactants such as Soya Lecithin. Preferably, the stabilising agents are selected from the group comprising or consisting of Bermodol SPS 2525, Bermodol SPS 2528, Bermodol SPS 2532, Bermodol SPS 2541 and Bermodol SPS 2543; Dispersogen LFH, Dispersogen LFS and Dispersogen FA 196.

Preferably, polyamide stabilising agents comprising at least two amino anchoring groups are not used.

In some embodiments, the stabilising agent is a flowable liquid as a 90wt% solution in water, preferably at 95wt% and more preferably it is a flowable liquid as a neat material at 25°C according to the syringe test hereinbelow described. Stabilising agents which do not meet these criteria tend to produce colorants that are more prone to blocking.

Stabilising agents of number average molecular weight up to 2000 Daltons are preferred because they tend to be flowable liquids according to the syringe test. As hereinbefore discussed, these are also known as surfactants.

Preferably, nonyl phenol ethoxylate surfactants are avoided as they are thought to damage the aquatic and marine environment.

Preferably, the colorants are free of alkyl polyglycoside surfactants as they are poor for colorant stability. They are also viscous materials and thus difficult to handle at room temperature. Furthermore their strong yellow colour is a disadvantage when formulating pastel shades, including white, as it can come through to the final paint.

In some embodiments, the amount of stabilising agent is from 3 to 13wt%, preferably from 3 to 12.5, more preferably from 4 to 12.0wt%, yet more preferably from 4 to 11.0 wt% and most preferably from 2 to 12.0wt%.

The combined amount of non-volatile organic liquid and stabilising agent must not exceed 28wt% based on the total weight of the colorant, otherwise the resulting dried paint film is unacceptably soft and easily damaged. Preferably, the combined amount comprises up to 26wt%, more preferably from 5 to 26wt%, even more preferably from 10 to 25, yet more preferably from 10 to 24 and most preferably from 13 to 23.5wt%.

**Rheology modifying clay**

Rheology modifying clays are minerals comprising high aspect ratio sub-micron sized particles and which can form stable dispersions in aqueous media. The particles in such dispersions form loosely associated networks throughout the aqueous medium of the colorant thereby imparting rheology to the colorant.

Suitable examples of rheology modifying clays include attapulgite such as the Attagel types including Attagel 50, bentonite such as the Bentone types, including Bentone EW and the Optigel types and laponite , including Laponite RD, Laponite RDS and Montmorillonite type clays. Preferably, the rheology modifying clay is selected from the group comprising or consisting of Attagel 50, Bentone EW, Laponite RD and Laponite RDS.

In some embodiments, the rheology of the colorant is shear thinning being either pseudoplastic or thixotropic, Preferably the Stormer viscosity at 25°C is from 40 to 150 KU, more preferably from 60 to 120 KU and most preferably from 60 to 80 KU.

In some embodiments, the low shear viscosity (LSV) is from 0.3 to 10.0Pa.s, more preferably from 0.5 to 6.0Pa.s and most preferably from 0.65 to 4.0 Pa.s measured at 25°C using a rotational rheometer such as a TA Instruments AR 1500ex with a 40mm flat steel plate geometry and a gap of 500 microns with a method defined by a continuous logarithmic ramp in shear rate from 0.01 to 1000 s$^{-1}$ and back, of <u>duration</u> 2 minutes in each direction and 10 points per decade and taking the viscosity value from the return curve data. A colorant having a LSV below the minimum specified herein will tend to show settlement of the pigments in the machine canisters and will gradually leak from the open nozzles. Conversely, too high a LSV will make accurate dispensing impossible because of the high start up pressures needed to commence flow.

In some embodiments, the Medium Shear Viscosity(MSV) measured using a Stormer viscometer (available from e.g. Sheen Instruments Ltd) at 25°C and after running for 1 minute is from 40 to 150 Krebs Units (KU), more preferably from 60 to 120 KU and most preferably from 60 to 80 KU. A colorant having a MSV below the minimum specified herein will show a tendency to drip from the nozzles. Conversely too high a MSV will require excessive pumping pressures.

In some embodiments, the High Shear Viscosity (HSV) is from 0.009 to 1 Pa.s, more preferably from 0.01 to 0.8 Pa.s and even more preferably from 0.02 to 0.4 Pa.s measured at 25°C and a shear rate of 10000s$^{-1}$ using a Cone and Plate Viscometer, available from REL Ltd or Sheen Instruments and described in ISO 2884. the method as described above for LSV. Too high a HSV will make pumping the colorant impossible and give problems of excessive rates of pump wear. Conversely too low a HSV will give problems of dripping from the nozzles.

In some embodiments, the amount of rheology modifying clay comprises from 0.1 to 8wt%, preferably from 0.3 to 8wt%, more preferably from 1 to 8wt%, yet more preferably from 1 to 6wt% and most preferably from 2 to 5wt%.

The colorant is preferably free of organic rheology modifers to ensure compatibility with both aqueous and solventborne basepaints. Examples of organic rheology modifiers include the cellulosics; the non-ionic synthetic associative thickeners; hydrophobically modified alkali swellable emulsions and alkali swellable synthetic emulsions.

**Extender**

Extenders are essentially non-opacifying and they have little or no effect on the hue of the colorant. They are particulate inorganic materials which have a refractive index the same as or similar to that of the polymer binder used in the base paint. Since the opacifying strength of any particulate material is a consequence of the difference in refractive index of the material and the medium in which it is dispersed and its particle size, such extenders have little or no opacity in resins typically used as binders in coatings, see page 35 to 37, Paint and Surface Coatings - theory and practice edited by R.Lambourne and published by John Wiley and Sons.

Suitable extenders include calcium carbonate such as ground or precipitated chalk, and calcite; calcium sulphate such as Gypsum and anhydrite; barium sulphate such as barytes and blance fixe; silicates such as silica, diatomaceous silica, kaolin and other clays and hydrous aluminosilicates, talc and mica; calcium magnesium carbonate such as Dolomite; aluminium oxide and aluminium hydroxide.

Preferably, the extender is selected from the group comprising or consisting of ground or precipitated chalk, calcite, calcium sulphate, Gypsum and anhydrite, barium sulphate, barytes, blance fixe, silicates, silica, diatomaceous silica, kaolin, talc, mica, calcium magnesium carbonate, Dolomite; aluminium oxide and aluminium hydroxide.

Preferably clays are used because of their relatively small particle size and their contribution to viscosity, more preferably clays are used that have been refined for particle size, removal of impurities and brightness. More preferably, hydrous alumino silicates are used and most preferably the ASP range from BASF especially ASP 602, ASP 200, Hydrite R, Burgess types including No.60 and No.80 and the Kaolin Speswhite range from Imerys.

In some embodiments, the extenders are present in amounts ranging from 0 to 18wt%, preferably from 0 to 16wt%, more preferably from 4 to 17wt% and most preferably from 7 to 16wt%.

The ratio of the combined weight of ingredients iii), iv) and v) : the combined weight of ingredients i) and ii) should be from 0.8:1 and 2.75:1. This ensures that drying of the colorant in or at the nozzles is prevented whilst maintaining the hardness of the derived dried paint film at acceptable levels. Preferably the ratio is from 0.9 to 2.5:1 more preferably from 1 to 2.1:1.

The combined weight of the rheology modifying clay iv) and the extender v) must be at least 2% when the amount of colour pigment is less that 51% otherwise the viscosity of the colorant is too low and the colorant will leak from the nozzles of those tinting machines fitted with open nozzles. Furthermore, the colorants in tinting machines are unstirred and if the viscosity is too low, the pigments, especially the denser ones, will tend to settle to the bottom of the container, making accurate dispensing into the basepaint impossible with the inevitable poor colour reproducibility in the final paint.

**Base paint**

Base paints are an essential component of any in-store tinting system. They comprise polymeric binder, pigment and additives, They are usually grouped into sets of three or four base paints (light, medium, deep and optionally a clear) to cover the range of colours in each product type. Different sets are required for solventborne and waterborne products and for products of different sheen levels. Each of the sets provides base paints of differing sheen levels.

The pigment in a light base paint will comprise mainly or wholly titanium dioxide whilst a clear base paint contains no colour pigment in order to accommodate as much deep colorant as is necessary to achieve the desired color.

The polymeric binder is any polymer that will form a coherent film at temperatures above 5°C. Coalescing solvents may be used to encourage film formation. The polymeric binder holds the particulate components of the paint together when dry, and also contributes to adhesion of the dried paint to substrates. Examples of the particulate components include pigments and clays, Suitable binders include acrylics, vinyls, vinyl-acrylics, polyurethanes, polyurethane-acrylics and alkyds. These may be dissolved or dispersed in aqueous media, including water, or in organic solvent

Additives include thickeners, solvents, including coalescing solvents, antifoams and biocides.

**Volatile Organic Content**

The volatile organic content (VOC) of a composition comprises organic matter which is volatile at the temperatures of use, for architectural coatings this is typically 25°C. Variously, according to different national regulations around the world organic matter having a vapour pressure greater than $1.3N/m^2$ at 25°C or having a boiling point lower than a critical value (250°C measured at 1 atmosphere, 101.325 kP, in the EU) or evaporating under the conditions in service and damaging the atmosphere is regarded as volatile. For the purposes of the present invention organic matter is considered to be volatile if it has a vapour pressure greater than $1.3N/m^2$ at 25°C. The volatile organic content is measured in accordance with ISO 11890 Part 2.

The VOC, expressed as g/L is calculated according to the following equation

$$VOC(g/L) = \frac{1000.\sum W_{VOC}(g)}{\left( \dfrac{W_{form}(g)}{\rho_{form}(g/ml)} - \dfrac{W_{water}(g)}{\rho_{water}(g/ml)} \right)}$$

Where $\Sigma W_{voc}$ is the total VOC in the formulation; $W_{form}$ is the weight of the formulation; $W_{water}$ is the weight of water in the formulation and $\rho_{form}$ and $\rho_{water}$ represent the density of the formulation and water respectively. The symbols in brackets indicate the units used.

Preferably the colorants have VOC from 0 to 40g/L, more preferably from 0 to 30g/L, even more preferably from 0 to 20g/L, yet more preferably from 0 to 10g/L, still more preferably from 0.05 to 5g/L and most preferably from 0.05 to 3g/L.

Preferably, the total particulate solids of the colorant, by which we mean the colour pigment iii) + the rheology modifying clay iv) + the extender v) comprisies or consists of from 4 to 65wt%, more preferably from 10 to 65, still more preferably from 20 to 50 and most preferably from 20 to 40wt%.

To minimise wear on tinting machine components the invention provides colorants of reduced high shear viscosity. For colorants with colour pigment content of greater than 40wt% the high shear viscosity is preferably between 0.2 and 1.0 Pa.s, more preferably between 0.3 and 0.85 Pa.s, even more preferably between 0.4 and 0.75 Pa.s and most preferably between 0.5 and 0.7 Pa.s. For colorants with pigment content of less than 40 wt% the high shear viscosity is preferably between,009 and 0.4 Pa.s, more preferably between 0,01 and 0.3 Pa.s, even more preferably between 0.02 and 0.25 Pa.s and most preferably between 0.02 and 0.1 Pa.s.

High shear viscosity is measured at 25°C with a Cone and Plate Viscometer, available from REL Ltd or Sheen Instruments and described in ISO 2884.

**Pigment**

Examples of colour pigments suitable for use in the invention are listed below and include;

Organic pigments for example:-

Monoazo pigments:

C.I. Pigment Brown 25; C.I. Pigment Orange 5, 13, 36, 38, 64 and 67; C.I. Pigment Red 1, 2, 3, 4, 5, 8, 9, 12, 17, 22, 23, 31, 48:1, 48:2, 48:3, 48:4, 49, 49:1, 51:1, 52:1, 52:2, 53, 53:1, 53:3, 57:1, 58:2, 58:4, 63, 112, 146, 148, 170, 175, 184, 185, 187, 188, 191:1, 208, 210, 245, 247 and 251; C.I. Pigment Yellow 1, 3, 62, 65, 73, 74, 97, 120, 151, 154, 168, 181, 183 and 191; C.I. Pigment Violet 32;

Diazo pigments:

C.I. Pigment Orange 16, 34, 44 and 72; C.I. Pigment Yellow 12, 13, 14, 16, 17, 81, 83, 106, 113, 126, 127, 155, 174, 176 and 188;

Diazo condensation pigments:

C.I. Pigment Yellow 93, 95 and 128; pigments: C.I. Pigment Red 144, 166, 214, 220, 221, 242 and 262; C.I. Pigment Brown 23 and 41;

Anthanthrone pigments:

C.I. Pigment Red 168;

Anthraquinone pigments:

C.I. Pigment Yellow 147, 177 and 199; C.I. Pigment Violet 31;

Anthrapyrimidine pigments:

C.I. Pigment Yellow 108;

Quinacridone pigments:

C.I. Pigment Orange 48 and 49; C.I. Pigment Red 122, 202, 206 and 209; C.I. Pigment Violet 19;

Quinophthalone pigments:

C.I. Pigment Yellow 138;

Diketopyrrolopyrrole pigments:

C.I. Pigment Orange 71, 73 and 81; C.I. Pigment Red 254, 255, 264, 270 and 272;

Dioxazine pigments:

C.I. Pigment Violet 23 and 37; C.I. Pigment Blue 80; flavanthrone pigments: C.I. Pigment Yellow 24;

Indanthrone pigments:

C.I. Pigment Blue 60 and 64;

Isoindoline pigments:

C.I. Pigments Orange 61 and 69; C.I. Pigment Red 260; C.I. Pigment Yellow 139 and 185;

Isoindolinone pigments:

C.I. Pigment Yellow 109, 110 and 173;

Isoviolanthrone pigments:

C.I. Pigment Violet 31;

Metal complex pigments:

C.I. Pigment Red 257; C.I. Pigment Yellow 117, 129, 150, 153 and 177; C.I. Pigment Green 8;

Perinone pigments:

C.I. Pigment Orange 43; C.I. Pigment Red 194;

Perylene pigments:

C.I. Pigment Black 31 and 32; C.I. Pigment Red 123, 149, 178, 179, 190 and 224; C.I. Pigment Violet 29;

Phthalocyanine pigments:

C.I. Pigment Blue 15, 15:1, 15:2, 15:3, 15:4, 15:6 and 16; C.I. Pigment Green 7 and 36;

Pyranthrone pigments:

C.I. Pigment Orange 51; C.I. Pigment Red 216;

Pyrazoloquinazolone pigments:

C.I. Pigment Orange 67; C.I. Pigment Red 251;

Thio indigo pigments:

C.I. Pigment Red 88 and 181; C.I. Pigment Violet 38;

Triarylcarbonium pigments:

C.I. Pigment Blue 1, 61 and 62; C.I. Pigment Green 1; C.I. Pigment Red 81, 81:1 and 169; C.I. Pigment Violet 1, 2, 3 and 27; C.I. Pigment Black 1 (aniline black); C.I. Pigment Yellow 101 (aldazine yellow); C.I. Pigment Brown 22.

Inorganic colour pigments for example:

White pigments: titanium dioxide (C.I. Pigment White 6), zinc white, pigment grade zinc oxide; zinc sulphide, lithopone;

Black pigments: iron oxide black (C.I. Pigment Black 11), iron manganese black, spinel black (C.I. Pigment Black 27); carbon black (C.I. Pigment Black 7);

Chromatic pigments: chromium oxide, chromium oxide hydrate green; chrome green (C.I. Pigment Green 48); cobalt green (C.I. Pigment Green 50); ultramarine green; cobalt blue (C.I. Pigment Blue 28 and 36; C.I. Pigment Blue 72); ultramarine blue; manganese blue; ultramarine violet; cobalt violet; manganese violet; red iron oxide (C.I. Pigment Red 101); cadmium sulfoselenide (C.I. Pigment Red 108); cerium sulphide (C.I. Pigment Red 265); molybdate red (C.I. Pigment Red 104); ultramarine red; brown iron oxide (C.I. Pigment Brown 6 and 7), mixed brown, spinel phases and corundum phases (C.I. Pigment Brown 29, 31, 33,34, 35, 37, 39 and 40), chromium titanium yellow (C.I. Pigment Brown 24), chrome orange; cerium sulphide (C.I. Pigment Orange 75); yellow iron oxide (C.I. Pigment Yellow 42); nickel titanium yellow (C.I. Pigment Yellow 53; C.I. Pigment Yellow 157, 158, 159, 160, 161, 162, 163, 164 and 189); chrlow 37 and 35); chrome yellow (C.I. Pigment Yellow 34); bismuth vanidate (C.I. Pigment Yellow 184).

Preferably the pigments are selected from the group consisting of CI Pigment Red 101,112, 122, 188, 254; CI Pigment Yellow 74; CI Pigment Violet 19; CI Pigment Blue 15; CI Pigment Green7; CI Pigment White 6 and CVI Pigment Black 7.

The CI designation refers to Colour Index, a system describing pigments published online by the society of Dyers and Colorists and the American Association of Textile Chemists and Colorists (http://www.colour-index.org/).

Lustre pigments: platelet-shaped pigments having a monophasic or polyphasic construction whose colour play is marked by the interplay of interference, reflection and absorption phenomena including aluminium platelets and aluminium, iron oxide and mica platelets bearing one or more coats, especially of metal oxides.

Such pigments are commercially available, for example, from BASF, Clariant, Ciba, Degussa, Elementis and Rockwood.

Usually, only one pigment is used in each colorant to but more may be used to achieve the correct hue. Preferably, only one is used.

**Additives**

The colorants may also contain additives selected from the group consisting of biocides, antifoamsflow aids and corrosion inhibitors. Preferably, the colorants are free of corrosion inhibitors of the type described in EP 0108536, which is hereby incorporated by reference.

**Ingredients used in the examples**

Stabilising agents

Bermodol 2525 is a coco monoethanolamide 5EO (non-ionic)
Bermadol 2532 is a cocomonoethanolamide 12 EO (non-ionic)
Bermadol 2543 is oleyl monoethanolamide 4EO (non-ionic)
Dispersogen LFH is tristyrylphenol polyoxyethylene phosphoric acid ester (anionic) Soya Lecithin phospholipid (zwitterionic)

Humectants

PEG 400 is polyethylene glycol of number-averaged molecular weight 400 Daltons
PPG 725 is polypropylene glycol of number-averaged molecular weight 725 Daltons

Pigments

Copperas R-3098D (red iron oxide) is available from Rockwood Pigments.
Raven 420 beads (black) available from Columbian Chemicals Co., USA Lansco 1222 Quinacridone Magenta R122 is available from Lansco.

Biocides

Rocima V 189 and Dowicil 75 are available from Dow
Polyphase AF3 available from Troy Corporation
Polyphase PW40 available from Troy Corporation
Acticide OTW available from Thor Specialities
Kathon LX 1.5% available from Dow
Proxel BD-20 available from Arch

Rheology Modifier

Attagel 50 is an attapulgite clay available from BASF.
Bentone EW is a bentonite clay available from Elementis Specialities

Extenders

ASP 602 is a hydrous alumino silicate available from BASF.

Antifoam

DEE FO P1-35 is available from Munzing Chemie GmbH
EFKA 2550 available from BASF

All formulations are parts by weight.

Aqueous clear base paint

The formulation of the aqueous base paint used in the examples is:

| Ingredient | Parts |
|---|---|
| Water | 30.67 |
| *Acrylic latex | 48.09 |
| Alumino-silicate | 11.49 |
| Calcium carbonate | 5.22 |
| Dispersant 1 | 0.63 |
| Dispersant 2 | 0.10 |
| Surfactant | 0.31 |
| 2-amino-2-methyl propan-1-ol | 0.18 |
| Biocide | 0.15 |
| Paraffinic distillate | 0.94 |
| Texanol | 1.63 |
| Cellulosic thickener | 0.60 |
| * nv=46.5%, Tg=27°C | |

Solventborne clear base paint

The formulation of the solventborne base paint used in the examples is:

| Ingredient | Parts |
|---|---|
| Long oil alkyd | 44.59 |
| Mineral spirits | 24.26 |
| Rheology modifier | 13.64 |
| Calcium carbonate | 2.06 |
| Surfactant | 12.13 |
| Co, Zr, Ca driers | 1.94 |
| Methyl ethyl ketoxime | 1.38 |

The invention will now be illustrated using the following examples

**Test method used to evaluate the examples.**

Build-Up on dispensing from a nozzle

The colorant to be tested is first de-aerated by centrifuging under vacuum. Thirty cm$^3$ of the sample is drawn into a 30 cm$^3$ syringe (available from B.Braun Medical Ltd, Sheffield, England, S35 2PW) through its nozzle (length 15mm and internal diameter of 2mm). The syringe, with plunger in place and the nozzle open, is supported vertically with the open nozzle pointing downwards and stored at 25°C at ambient humidity.
Dispense 5cm$^3$ of the colorant every hour and inspect any build-up around the nozzle outlet after each dispense. Rate the build-up according to the following scale.

0- Thick build-up/blocked nozzle(WORST)
1- Stalactite shaped build-up/angled dispense
2- Slightly dried build-up/angled dispense
3- Build-up falls off/angled dispense
4- Wet drop on nozzle/not building up
5- Nothing on nozzle (BEST)

It is helpful to photograph the area around the nozzle following each dispense as it makes comparisons easier.
The invention will now be illustrated by the following examples

**Examples**

Example 1 - Extender Base (Containing Polypropylene Glycol)

In a first stage the following components are added, by weight, to the clean, dry vessel of a High Speed Disperser (HSD), with slow stirring (about 500 rpm), 33.6 parts of water, 10.2 parts of Polypropylene Glycol 725 (PPG725, humectant), 3.41 parts of Polyethylene Glycol 400 (PEG400, humectant), 0.055 parts of DEE FO PI-35 (Defoamer), 1.08 parts ofBermodol 2532 (Surfactant), 1.53 parts of Bermodol 2543 (Surfactant), 0.791 parts of Dispersogen LFH (Wetting agent) and 0.182 parts of Dowicil 75 (Biocide). The mixture is stirred for a further 5 minutes at about 500 rpm. Then 20.1 parts of ASP 602 (clay extender) and 6.73 parts of Attagel 50 (rheology modifying clay) are added. Once all of the extender and rheology modifying clay are incorporated the impeller speed is increased to about 1000 rpm for 15 minutes, ensuring that the temperature does not rise about 50°C. Use a Hegman gauge to check that the fineness of grind is less than 10 microns. Reduce the impeller speed to 500 rpm and add 21.4 parts of water. Increase the impeller speed back to about 1000 rpm for 10 minutes then, while continuing to stir at this speed, add 0.090 parts of Kathon LXE/ Kathon LX 1.5 (Biocide), 0.100 parts of Proxel BD20 (Biocide) and 0.250 parts of Polyphase PW40 (Biocide). Then add as a flush 0.500 parts of water and continue to stir at about 1000 rpm for 10 minutes.
Commercial sources for the component materials are given in the table below.

Comparative Example A - Extender Base (Containing no Polypropylene Glycol)

In a first stage the following components are added, by weight, to the clean, dry vessel of a High Speed Disperser (HSD), with slow stirring (about 500 rpm), 51.2 parts of water, 0.790 parts of Polyethylene Glycol 400 (PEG400, humectant), 0.060 parts of DEE FO PI-35 (Defoamer), 1.19 parts of Bermodol 2532 (Surfactant), 1.68 parts of Bermodol 2543 (Surfactant), 0.870 parts of Dispersogen LFH (Wetting agent) and 0.200 parts of Dowicil 75 (Biocide). The mixture is stirred for a further 5 minutes at about 500 rpm. Then 22.1 parts of ASP 602 (clay extender) and 7.40 parts of Attagel 50 (rheology modifying clay) are added. Once all of the extender and rheology modifying clay are incorporated the impeller speed is increased to about 1000 rpm for 15 minutes, ensuring that the temperature does not rise about 50°C. Use a Hegman gauge to check that the fineness of grind is less than 10 microns. Reduce the impeller speed to 500 rpm and add 14.1 parts of water. Increase the impeller speed back to about 1000 rpm for 10 minutes then, while continuing to stir at this speed, add 0.090 parts of Kathon LXE/ Kathon LX 1.5 (Biocide), 0.100 parts of Proxel BD20 (Biocide) and 0.250 parts of Polyphase PW40 (Biocide). Then add as a flush 0.500 parts of water and continue to stir at about 1000 rpm for 10 minutes.

Table 1 : Extender Base Formulations

| Component Name | Source | Function | Example 1 Parts | Example A parts |
|---|---|---|---|---|
| Water | | | 55.5 | 65.3 |
| PPG 725 | Bayer | Humectant | 10.20 | 0 |
| PEG 400 | Dow | Humectant | 3.41 | 0.79 |
| DEE FO PI-35 | Munzing | Defoamer | 0.055 | 0.06 |
| Bermodol 2532 | AkzoNobel | Surfactant | 1.08 | 1.19 |
| Bermodol 2543 | AkzoNobel | Surfactant | 1.53 | 1.68 |
| Dispersoqen LFH | Clariant | Wetting Agent | 0.791 | 0.87 |
| Dowicil 75 | Dow | Biocide | 0.182 | 0.20 |
| ASP 602 | BASF | Extender Pigment | 20.10 | 22.1 |
| Attagel 50 | BASF | Rheology modifying Clay | 6.73 | 7.40 |
| Kathon LXE/Kathon LX 1.5% | Dow | Biocide | 0.09 | 0.090 |
| roxel BD20 | Lonza | Biocide | 0.10 | 0.10 |
| Polyphase PW40 | Troy | Biocide | 0.25 | 0.25 |

Example 2 - Organic Yellow Strong Base without PPG

In a first stage the following components are added, by weight, to the clean, dry vessel of a High Speed Disperser (HSD), with slow stirring (about 500 rpm), 37.0 parts of water, 3.42 parts of Polyethylene Glycol 400 (PEG400, humectant), 0.341 parts of DEE FO PI-35 (Defoamer), 2.63 parts ofBermodol 2525 (Surfactant), 2.63 parts of Bermodol 2543 (Surfactant), 4.59 parts of Dispersogen LFH (Wetting agent), 0.045 parts of Kathon LXE / Kathon LX 1.5% (Biocide) and 0.254 parts of Dowicil 75 (Biocide). The mixture is stirred for a further 10 minutes at about 500 rpm. Then 40.1 parts of 1274 Hansa Yellow 74 (Yellow pigment) and 0.341 parts of Kathon LXE / Kathon LX 1.5% (Biocide) are added. Once all of the pigment has been incorporated the impeller speed is increased to about 1000 rpm for 30 minutes, ensuring that the temperature does not rise about 40°C.

In a second stage, the mill base is passed once through a bead mill (using 1mm glass beads as the grinding media and mill speed from 1000-1500rpm). Then, with suitable stirring using a standard laboratory stirrer the following components are added, 8.28 parts of water, 0.045 parts of Kathon LXE / Kathon LX 1.5%, 0.10 parts of Proxel BD20 and 0.25 parts of Polyphase PW40.

Table 2: Organic Yellow Strong Base Formulation

| Component Name | Source | Function | Example 2 parts |
|---|---|---|---|
| Water | | | 45.3 |
| PEG 400 | Dow | Humectant | 3.42 |
| DEE FO PI-35 | Munzing | Defoamer | 0.682 |
| Bermodol 2525 | AkzoNobel | Surfactant | 2.63 |
| Bermodol 2543 | AkzoNobel | Surfactant | 2.63 |
| Dispersogen LFH | Clariant | Wetting Agent | 4.59 |
| Dowicil 75 | Dow | Biocide | 0.254 |
| Hansa Yellow 74 | Lansco | Yellow Pigment | 40.10 |
| Kathon LXE/Kathon LX 1.5% | Dow | Biocide | 0.09 |
| Proxel BD20 | Lonza | Biocide | 0.10 |
| Polyphase PW40 | Troy | Biocide | 0.25 |

Example 3 Organic Yellow Colorant Formulation containing PPG

In a first stage the following components are added, by weight, to the clean, dry vessel of a standard laboratory stirrer, with slow stirring (about 500 rpm), 51.8 parts of Example 2 Organic Yellow Strong Base, 29.2 parts of Example 1 extender base, 6.72 parts of Polypropylene Glycol 725 (PPG725, humectant), 2.24 parts of Polyethylene Glycol 400 (PEG400, humectant), and 10 parts of water. The mixture is stirred for a further 10 minutes at about 500 rpm. Then, with stirring the following components are added, 0.009 parts of Kathon LXE/ Kathon LX 1.5 (Biocide), 0.01 parts of Proxel BD20 (Biocide), 0.027 parts of Polyphase PW40 (Biocide) and 0.027 parts of DEE FO PI-35 (defoamer). Continue stirring for a further 10 minutes.

Comparative Example B Organic Yellow Colorant Formulation containing no PPG

In a first stage the following components are added, by weight, to the clean, dry vessel of a standard laboratory stirrer, with slow stirring (about 500 rpm), 51.70 parts of Example 2 Organic Yellow Strong Base, 34.2 parts of Comparative Example A extender base and 13.9 parts of Polyethylene Glycol 400 (PEG400, humectant). The mixture is stirred for a further 10 minutes at about 500 rpm. Then, with stirring the following components are added, 0.013 parts of Kathon LXE/ Kathon LX 1.5 (Biocide), 0.014 parts of Proxel BD20 (Biocide), 0.035 parts of Polyphase PW40 (Biocide) and 0.027 parts of DEE FO PI-35 (defoamer). Continue stirring for a further 10 minutes.

Table 3 Organic Yellow Colorant Formulations

| Component Name | Source | Function | Example 3 Parts | Example B Parts |
|---|---|---|---|---|
| Water | | | 10.00 | 0.00 |
| Example 2 Strong Base | | | 51.80 | 51.7 |
| Example 1 Extender Base | | | 29.20 | 0.00 |
| Comp.Example A Extender Base | | | 0.00 | 34.2 |
| PPG 725 | Bayer | Humectant | 6.72 | 0.00 |
| PEG 400 | Dow | Humectant | 2.24 | 13.9 |
| DEE FO PI-35 | Munzinq | Defoamer | 0.027 | 0.027 |
| Kathon LXE/Kathon LX 1.5% | Dow | Biocide | 0.009 | 0.013 |
| Proxel BD20 | Lonza | Biocide | 0.011 | 0.014 |
| Polyphase PW40 | Troy | Biocide | 0.027 | 0.035 |

**Build-Up Rating (final after six 5ml dispenses)**

**Example 3 : 4-5**

**Comparative Example B: 0-1**

There follows three more examples of colorants that contain PPG and show the advantages of the invention. Like the organic yellow one they are made first as a strong base that is then let down with other ingredients.

Example 4 - Red Oxide Strong Base

In a first stage the following components are added, by weight, to the clean, dry vessel of a High Speed Disperser (HSD), with slow stirring (about 500 rpm), 10.00 parts of water, 0.541 parts of Polyethylene Glycol 400 (PEG400, humectant), 0.25 parts of DEE FO PI-35 (Defoamer), 2.75 parts of Bermodol 2532 (Surfactant), 7.32 prts of Bermodol 2543 (Surfactant), 6.65 parts of Dispersogen LFH (Wetting agent), 1.00 parts of Yelkin TS (surfactant). 0.22 parts of Dowicil 75 (Biocide). The mixture is stirred for a further 10 minutes at about 500 rpm. Then 30.8 parts of Rockwood Copperas Red R-3098D (Red pigment) and 2.74 parts of Water are added, then another 30.00 parts of Rockwood Copperas Red R-3098D (Red pigment) and another 2.41 parts of Water. Once all of the pigment has been incorporated the impeller speed is increased to about 1000 rpm for 30 minutes, ensuring that the temperature does not rise about 45°C.
In a second stage, with suitable stirring using a standard laboratory stirrer, the following components are added, 2.62 parts of water, 0.09 parts of Kathon LXE / Kathon LX 1.5%, 0.10 parts of Proxel BD20 and 0.25 parts of Polyphase PW40 and 2.32 parts of Water. The strong base is then stirred finally for another 15 minutes.

Table 4:Red Oxide Strong Base Formulation

| Component Name | Source | Function | Example 4 parts |
|---|---|---|---|
| **Water** | | | 20.084 |
| **PEG 400** | Dow | Humectant | 0.541 |
| **DEE FO PI-35** | Munzing | Defoamer | 0.25 |
| **Bermodol SPS 2532** | AkzoNobel | Surfactant | 2.748 |
| **Bermodol SPS 2543** | AkzoNobel | Surfactant | 7.322 |
| **Dispersogen LFH** | Clariant | Wetting Agent | 6.645 |
| **Yelkin TS** | Archer Daniels Midland (ADM) | Surfactant | 1.00 |
| **Dowicil 75** | Dow | Biocide | 0.22 |
| **Copperas Red R-3098D** | Rockwood | Red Pigment | 60.75 |
| **Kathon LXE / Kathon LX 1.5%** | Dow | Biocide | 0.09 |
| **Proxel BD20** | Lonza | Biocide | 0.10 |
| **Polyphase PW40** | Troy | Biocide | 0.25 |

Example 5 Red Oxide Colorant Formulation containing PPG

In a first stage the following components are added, by weight, to the clean, dry vessel of a standard laboratory stirrer, with slow stirring (about 500 rpm), 17.60 parts of Example 1 Extender Base, 0.813 parts of Water, then 64.00 parts of Example 4 Red Oxide Strong Base and another 8.60 parts of Example 1 Extender Base, then 1.50 parts of Water, 0.40 parts of PEG 400 (humectant), 1.1 parts of PPG 725( humectant), then add another 6 parts of Example 1 Extender Base, 0.00300 parts of Kathon LXE / Kathon LX 1.5% (Biocide), 0.004 parts of Proxel BD20 (Biocide) and 0.010 parts of Polyphase PW40 (Biocide).

Table 5 Red Oxide Colorant Formulation

| Component Name | Source | Function | Example 5 Wt% |
|---|---|---|---|
| Example 1 Extender base - | | | 32.20 |
| Water | | | 2.313 |
| Example 4 Strong Base | | | 63.97 |
| PEG 400 | Dow | Humectant | 0.40 |
| PPG 725 | Bayer | Humectant | 1.10 |
| Kathon LXE / Kathon LX 1.5% | Dow | Biocide | 0.003 |
| Proxel BD20 | Lonza | Biocide | 0.004 |
| Polyphase PW40 | Troy | Biocide | 0.010 |

This Red Oxide colorant also showed a final rating of 4-5 after six 5ml dispenses in the Build-Up Nozzle Dispensing Test, demonstrating that it too shows the advantages of this invention.

Example 6 - Black Strong Base

In a first stage the following components are added, by weight, to the clean, dry vessel of a High Speed Disperser (HSD), with slow stirring (about 500 rpm), 20.7 parts of water, 8.64 parts of Polyethylene Glycol 400 (PEG400, humectant), 0.200 parts of DEE FO PI-35 (Defoamer), 1.60 parts of Yelkin TS (Surfactant), 7.49 parts of Dispersogen LFH (wetting agent), 4.17 parts of Bermodol 2525 (Surfactant), 6.99 parts of Bermodol 2543 (Surfactant), 0.045 parts of Kathon LXE

/ Kathon LX 1.5% (Biocide) and 0.314 parts of Dowicil 75 (Biocide). The mixture is stirred for a further 10 minutes at about 500 rpm. Then 9.38 parts of ASP 602 (Extender), 24.50 parts of Raven 420 Beads (Black pigment) and 14.97 parts of Water are added, then 0.10 parts of DEE FO PI-35 (Defoamer). Once all of the pigment has been incorporated the impeller speed is increased to about 1000 rpm for 30 minutes, ensuring that the temperature does not rise about 40°C.

In a second stage, pass the mixture three times through a bead mill (using 1 mm glass beads as the grinding media and mill speed from 1000-1500rpm), keeping the temperature below 43°C. Then, with suitable stirring using a standard laboratory stirrer, the following components are added, 0.045 parts of Kathon LXE / Kathon LX 1.5%, 0.100 parts of Proxel BD20 and 0.250 parts of Polyphase PW40 and 0.526 parts of Water. The strong base is then stirred finally for another 10 minutes.

Table 6: Black Strong Base Formulation

| Component Name | Source | Function | Example 6 parts |
|---|---|---|---|
| Water | | | 36.179 |
| PEG 400 | Dow | Humectant | 8.644 |
| DEE FO PI-35 | Munzing | Defoamer | 0.30 |
| Yelkin TS | ADM | Surfactant | 1.603 |
| Dispersogen LFH | Clariant | Surfactant | 7.487 |
| Bermodol SPS 2525 | AkzoNobel | Wetting Agent | 4.169 |
| Bermodol SPS 2543 | AkzoNobel | Surfactant | 6.988 |
| Kathon LXE / Kathon LX 1.5% | Dow | Biocide | 0.09 |
| Dowicil 75 | Dow | Biocide | 0.314 |
| ASP 602 | BASF | Extender | 9.383 |
| Raven 420 Beads | Columbian Chemicals | Black Pigment | 24.493 |
| Proxel BD20 | Lonza | Biocide | 0.10 |
| Polyphase PW40 | Troy | Biocide | 0.25 |
| Total | | | 100 |

Example 7 Black Colorant Formulation containing PPG

In a first stage the following components are added, by weight, to the clean, dry vessel of a standard laboratory stirrer, with slow stirring (about 500 rpm), 66.80 parts of Example 1 Extender Base, 1.33 parts of PEG400 (humectant), 3.98 parts of PPG725 (humectants), then 25.60 parts of Example 6 Black Strong Base, 2.30 parts of Water, 0.007 parts of Kathon LXE / Kathon LX 1.5% (Biocide), 0.008 parts of Proxel BD20 (Biocide) and 0.022 parts of Polyphase PW40 (Biocide). Then mix at 1000rpm for 10 minutes.

Table 7 Black Colorant Formulation

| Component Name | Source | Function | Example 7 parts |
|---|---|---|---|
| Example 1 Extender Base | | | 66.782 |
| PEG 400 | Dow | Humectant | 1 .327 |
| PPG725 | Bayer | Humectant | 3.98 |
| Example 6 Strong Base | | | 25.574 |
| Water | | | 2.3 |
| Kathon LXE / Kathon LX 1.5% | Dow | Biocide | 0.007 |
| Proxel BD20 | Lonza | Biocide | 0.008 |
| Polyphase PW40 | Troy | Biocide | 0.022 |
| Total | | | 100 |

This Black colorant also showed a final rating of 4-5 after six 5ml dispenses in the Build-Up Nozzle Dispensing Test, demonstrating that it too shows the advantages of this invention.

Example 8 - Magenta Strong Base

In a first stage the following components are added, by weight, to the clean, dry vessel of a High Speed Disperser (HSD), with slow stirring (about 500 rpm), 43.30 parts of water, 5.18 parts of Polyethylene Glycol 400 (PEG400, humectant), 0.30 parts of DEE FO PI-35 (Defoamer), 4.58 parts of Bermodol SPS 2532 (Surfactant), 6.06 parts of Yelkin TS (Surfactant), 4.37 parts of Dispersogen LFH (wetting agent) 0.045 parts of Kathon LXE/Kathon LX 1.5% (Biocide) and 0.294 parts of Dowicil 75 (Biocide). The mixture is stirred for a further 10 minutes at about 500 rpm. Then 29.40 parts of Lansco 1222 Quinacridone Magenta R122 (Magenta pigment) are added. Once all of the pigment has been incorporated the impeller speed is increased to about 1000 rpm for 30 minutes, ensuring that the temperature does not rise about 40°C.

In a second stage, pass the mixture three times through a bead mill (using 1mm glass beads as the grinding media and mill speed from 1000-1500rpm). Then, with suitable stirring using a standard laboratory stirrer, the following components are added, 6.08 parts of water, 0.045 parts of Kathon LXE / Kathon LX 1.5%, 0.094 parts of Proxel BD20 and 0.235 parts of Polyphase PW40. The strong base is then stirred finally for another 10 minutes.

Table 8: Magenta Strong Base Formulation

| Component Name | Source | Function | Example 6 parts |
|---|---|---|---|
| Water | | | 49.4 |
| PEG 400 | Dow | Humectant | 5.18 |
| DEE FO PI-35 | Munzing | Defoamer | 0.300 |
| Bermodol SPS 2532 | AkzoNobel | Surfactant | 4.58 |
| Yelkin TS | ADM | Surfactant | 6.06 |
| Dispersogen LFH | Clariant | Wetting Agent | 4.37 |
| Kathon LXE / Kathon LX 1.5% | Dow | Biocide | 0.090 |
| Dowicil 75 | Dow | Biocide | 0.294 |
| Lansco 1222 Quinacridone Magenta R122 | Lansco | Magenta Pigment | 29.4 |
| Proxel BD20 | Lonza | Biocide | 0.094 |
| Polyphase PW40 | Troy | Biocide | 0.235 |

Example 9 Magenta Colorant Formulation containing PPG

In a first stage the following components are added, by weight, to the clean, dry vessel of a standard laboratory stirrer, with slow stirring (about 500 rpm), 26.1 parts of Example 1 Extender Base, 2.00 parts of Water, then 29.10 parts of Example 8 Magenta Strong Base, then another 1.50 parts of Example 1 Extender Base and 1.50 parts Water, then add another 19.00 parts of Example 1 Extender Base, 6.38 parts of Water, 1.10 parts of PEG400 (humec and 3.81 parts of PPG725 (humectant). Turn the stirrer speed up to about 1000rpm and stir for 60 minutes. Then add another 3.00 parts of Example 1 Extender Base, 0.50 parts of PEG400 (humectant) and 1.50 parts of Water. Mix at about 1000rpm for another 60 minutes. Add another 2.00 parts of Example 1 Extender Base, 1.00 part of PPG725 (humectants), 1.45 parts of Water, 0.017 parts of Kathon LXE / Kathon LX 1.5% (Biocide), 0.021 parts of Proxel BD20 (Biocide) and 0.053 parts of Polyphase PW40 (Biocide). Then finally mix at 1000rpm for another 60 minutes.

Table 9 Magenta Colorant Formulation

| Component Name | Source | Function | Example 9 parts |
|---|---|---|---|
| Example 1 Extender Base | | | 51.60 |
| Water | | | 12.80 |
| Example 8 Strong Base | | | 30.10 |

(continued)

| Component Name | Source | Function | Example 9 parts |
|---|---|---|---|
| PEG 400 | Dow | Humectant | 1.60 |
| PPG725 | Bayer | Humectant | 4.81 |
| Kathon LXE / Kathon LX 1.5% | Dow | Biocide | 0.017 |
| Proxel BD20 | Lonza | Biocide | 0.021 |
| Polyphase PW40 | Troy | Biocide | 0.053 |

This Magenta colorant also showed a final rating of 4-5 after six 5ml dispenses in the Build-Up Nozzle Dispensing Test, demonstrating that it too shows the advantages of this invention.

Example 10 - A composition containing a binder polymer

To 100 parts of the Example 3 Organic Yellow Colorant were added, with mixing, 10 parts of a styrene-acrylic co-polymer latex (50wt% solids, theoretical (Fox) Tg of 30°C).
The resulting composition was tested using the Build-Up Nozzle Dispensing Test and gave a rating of 2 after six 5ml dispenses.
As can be seen, the colorants made according to the invention (Examples 3, 5, 7, 9 and 10) all show very low or no build-up on nozzles.

Claims

1.  An aqueous liquid colorant composition having a volatile organic content up to 50g/l and suitable for colouring aqueous or solventborne architectural coatings and base paints comprising based on the total weight of the composition,

    i) from 1 to 26% of non-volatile organic liquid having a vapour pressure up to 1.3 N/m$^2$ at 25°C and comprising a mixture of polyethylene glycol (PEG) and polypropylene glycol (PPG)
    ii) from 2 to 13% of stabilising agent
    iii) from 4 to 77% of colour pigment
    iv) from 0 to 8% of rheology modifying clay
    v) from 0 to 20% of extender

    wherein the ratio of the combined weight of iii)+iv)+v) : the combined weight of i)+ii) is from 0.8 to 2.75:1 and the combined weight of the non-volatile organic liquid i) and the stabilising agent ii) is no greater than 28% and the combined weight of the rheology modifying clay iv) and the extender v) is at least 2% when the amount of colour pigment is less than 51 %.

2.  A colorant composition according to claim 1 wherein the non-volatile organic liquid comprises from 4 to 25wt%, preferably from 4 to 19.5wt%.

3.  A colorant composition according to claim 1 or 2, wherein the PEG has a molecular weight of at least 200 Daltons, preferably of from 200 to 800 Daltons, more preferably of 400 Daltons.

4.  A colorant composition according to any one of the previous claims wherein the PPG has a molecular weight of from 300 to 1200 Daltons, preferably of from 400 to 1000 Daltons.

5.  A colorant composition according to claim 4 wherein the PPG is selected from PPG400, PPG725 and PPG1000.

6.  A colorant composition according to any one of the previous claims wherein the PEG: PPG ratio based on the total weight of the non-volatile organic liquid is from 8:2 to 2:8, preferably from 7:3 to 3:7.

7.  A colorant composition according to any one of the previous claims and which is free of polymeric binder.

8. A colorant composition according to any one of the previous claims wherein the stabilising agent consists of surfactant and wherein the colorant is free of dispersant.

9. An architectural coating composition comprising or consisting of at least one colorant according to any one of the preceding claims and at least one base paint.

10. A tinting scheme comprising or consisting of at least one base paint and at least one colorant according to any one of claims 1 to 8.

11. A tinting machine for in-store tinting of base paint, comprising or consisting of at least one colorant according to any one of claims 1 to 8, in a container, the container being fitted or connected to an exit nozzle.

12. A tinting machine according to claim 11 wherein the exit nozzle is of the open nozzle type.

13. A tinting machine according to claim 11 or claim 12 wherein the colorant is packaged in a container having a volume of from 0.5 to 5 litres.

14. A tinting machine according to any one of claims 11 to 13 wherein the base paint is packaged in a container having a volume of from 0.5 to 25 litres.

15. A method for in-store production of architectural coating including the steps of dispensing at least one colorant selected from a tinting machine according to any one of claims 11 to 14 into a base paint.


**Patentansprüche**

1. Wässrige, flüssige Farbstoffzusammensetzung mit einem Gehalt an flüchtigen, organischen Bestandteilen bis zu 50 g/l und geeignet zur Färbung wässriger oder lösungsmittelhaltiger Bautenfarben und Grundfarben, umfassend, basierend auf dem Gesamtgewicht der Zusammensetzung,

   i) von 1 bis 26% einer nichtflüchtigen, organischen Flüssigkeit mit einem Dampfdruck bis zu 1,3 $N/m^2$ bei 25°C und umfassend eine Mischung aus Polyethylenglykol (PEG) und Polypropylenglykol (PPG)
   ii) von 2 bis 13% eines Stabilisierungsmittels
   iii) von 4 bis 77% eines Farbpigments
   iv) von 0 bis 8% von Rheologie modifizierendem Ton
   v) von 0 bis 20% Streckmittel

   wobei das Verhältnis des kombinierten Gewichts von iii)+iv)+v) : dem kombinierten Gewicht von i)+ii) von 0,8 bis 2,75:1 ist und
   das kombinierte Gewicht der nichflüchtigen, organischen Flüssigkeit i) und des Stabilisierungsmittels ii) nicht größer als 28% ist und
   das kombinierte Gewicht des Rheologie modifizierenden Tons iv) und des Streckmittels v) mindestens 2% ist, wenn die Menge des Farbpigments weniger als 51 % beträgt.

2. Farbstoffzusammensetzung nach Anspruch 1, wobei die nichtflüchtige, organische Flüssigkeit von 4 bis 25 Gew.%, vorzugsweise von 4 bis 19,5 Gew.%, hat.

3. Farbstoffzusammensetzung nach Anspruch 1 oder 2, wobei das PEG ein Molekulargewicht von mindestens 200 Dalton, vorzugsweise von 200 bis 800 Dalton, weiter bevorzugt von 400 Dalton, hat.

4. Farbstoffzusammensetzung nach einem der vorhergehenden Ansprüche, wobei das PPG ein Molekulargewicht von 300 bis 1200 Dalton, vorzugsweise von 400 bis 1000 Dalton, umfasst.

5. Farbstoffzusammensetzung nach Anspruch 4, wobei das PPG aus PPG400, PPG725 und PPG1000 ausgewählt ist.

6. Farbstoffzusammensetzung nach einem der vorhergehenden Ansprüche, wobei das Verhältnis von PEG:PPG, basierend auf dem Gesamtgewicht der nichtflüchtigen, organischen Flüssigkeit von 8:2 bis 2:8, vorzugsweise von 7:3 bis 3:7, beträgt.

**7.** Farbstoffzusammensetzung nach einem der vorhergehenden Ansprüche, die frei von polymeren Bindemitteln ist.

**8.** Farbstoffzusammensetzung nach einem der vorhergehenden Ansprüche, wobei das Stabilisierungsmittel aus einem Tensid besteht und wobei der Farbstoff frei von Dispergiermitteln ist.

**9.** Baufarbenzusammensetzung umfassend oder bestehend aus mindestens einem Farbstoff nach einem der vorhergehenden Ansprüche und mindestens einer Grundfarbe.

**10.** Abtönschema umfassend oder bestehend aus mindestens einer Grundfarbe und mindestens einem Farbstoff nach einem der Ansprüche 1 bis 8.

**11.** Abtönmaschine zum Abtönen einer Grundfarbe im Ladengeschäft, umfassend oder bestehend aus mindestens einem Farbstoff nach einem der Ansprüche 1 bis 8 in einem Behälter, wobei der Behälter an einer Austrittsdüse befestigt oder mit ihr verbunden ist.

**12.** Abtönmaschine nach Anspruch 11, wobei die Austrittsdüse eine offene Düse ist.

**13.** Abtönmaschine nach Anspruch 11 oder 12, wobei der Farbstoff in einem Behälter mit einem Volumen von 0,5 bis 5 Litern verpackt ist.

**14.** Abtönmaschine nach einem der Ansprüche 11 bis 13, wobei die Grundfarbe in einem Behälter mit einem Volumen von 0,5 bis 25 Litern verpackt ist.

**15.** Verfahren für die Herstellung einer Bautenfarbe im Ladengeschäft, umfassend die Schritte des Abgebens von mindestens einem Farbstoff, ausgewählt aus einer Abtönmaschine nach einem der Ansprüche 11 bis 14, in eine Grundfarbe.


**Revendications**

**1.** Composition de colorant aqueuse liquide ayant une teneur en composés organiques volatils allant jusqu'à 50 g/l et appropriée pour colorer des peintures de base et des revêtements architecturaux aqueux ou à base de solvant comprenant, sur la base du poids total de la composition,

i) de 1 à 26% d'un liquide organique non volatil ayant une pression de vapeur allant jusqu'à 1,3 N/m$^2$ à 25°C et comprenant un mélange de polyéthylène glycol (PEG) et de polypropylène glycol (PPG)
ii) de 2 à 13% d'un agent stabilisant
iii) de 4 à 77% d'un pigment coloré
iv) de 0 à 8% d'une argile modifiant la rhéologie
v) de 0 à 20% d'une matière de charge

où le rapport poids combiné de iii) + iv) + v) : poids combiné de i) + ii) est compris entre 0,8 et 2,75:1 et le poids combiné du liquide organique non volatil i) et de l'agent stabilisant ii) est inférieur ou égal à 28% et le poids combiné de l'argile modifiant la rhéologie iv) et de la matière de charge v) est d'au moins 2% lorsque la quantité de pigment coloré est inférieure à 51%.

**2.** Composition de colorant selon la revendication 1, dans laquelle le liquide organique non volatil comprend de 4 à 25% en poids, de préférence de 4 à 19,5% en poids.

**3.** Composition de colorant selon la revendication 1 ou 2, dans laquelle le PEG a un poids moléculaire d'au moins 200 Daltons, de préférence de 200 à 800 Daltons, plus préférablement de 400 Daltons.

**4.** Composition de colorant selon l'une quelconque des revendications précédentes, dans laquelle le PPG a un poids moléculaire allant de 300 à 1200 Daltons, de préférence de 400 à 1000 Daltons.

**5.** Composition de colorant selon la revendication 4, dans laquelle le PPG est choisi parmi le PPG400, le PPG725 et le PPG1000.

**6.** Composition de colorant selon l'une quelconque des revendications précédentes, dans laquelle le rapport PEG : PPG basé sur le poids total du liquide organique non volatil est compris entre 8:2 et 2:8, de préférence entre 7:3 et 3:7.

**7.** Composition de colorant selon l'une quelconque des revendications précédentes et qui est exempte de liant polymère.

**8.** Composition de colorant selon l'une quelconque des revendications précédentes, dans laquelle l'agent stabilisant est constitué d'un tensioactif, et dans laquelle le colorant est exempt de dispersant.

**9.** Composition revêtement architectural comprenant ou étant constituée d'au moins un colorant selon l'une quelconque des revendications précédentes et d'au moins une peinture de base.

**10.** Système de teinture comprenant ou étant constitué d'au moins une peinture de base et d'au moins un colorant selon l'une quelconque des revendications 1 à 8.

**11.** Machine à teinter pour une teinture en magasin d'une peinture de base, comprenant ou étant constituée d'au moins un colorant selon l'une quelconque des revendications 1 à 8, dans un récipient, le récipient étant fixé sur ou relié à une buse de sortie.

**12.** Machine à teinter selon la revendication 11, dans laquelle la buse de sortie est du type buse ouverte.

**13.** Machine à teinter selon la revendication 11 ou 12, dans laquelle le colorant est conditionné dans un récipient ayant un volume compris entre 0,5 et 5 litres.

**14.** Machine à teinter selon l'une quelconque des revendications 11 à 13, dans laquelle la peinture de base est conditionnée dans un récipient ayant un volume compris entre 0,5 et 25 litres.

**15.** Procédé pour la production en magasin d'un revêtement architectural comportant les étapes consistant à distribuer au moins un colorant choisi à partir d'une machine à teinter selon l'une quelconque des revendications 11 à 14 dans une peinture de base.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2011151277 A
- WO 2006102341 A

- EP 0108536 A

**Non-patent literature cited in the description**

- Paint and Surface Coatings - theory and practice. John Wiley and Sons, 35-37

- Dyers and Colorists. American Association of Textile Chemists and Colorists